# EUROPEAN PATENT APPLICATION

(11) **EP 2 819 286 A1**
(43) Date of publication of application: **31.12.2014**
(21) Application number: 14173728.8
(22) Date of filing: 24.06.2014
(51) Int. Cl.: H02M 1/12, H02M 7/12

(54) **Converter control device**

(30) Priority: 27.06.2013 JP 2013134491
(71) Applicant: Hitachi Ltd., Tokyo (JP)
(72) Inventor: Tachihara, Shuichi, Chiyoda-ku, Tokyo 100-8280 (JP); Nozaki, Yuichiro, Chiyoda-ku, Tokyo 100-8280 (JP); Ayata, Masataka, Chiyoda-ku, Tokyo 100-8280 (JP)
(74) Representative: Moore, Graeme Patrick

(57) **Abstract**

[Objection]

A converter control device capable of suppressing a higher harmonic component of a primary current even when distortion of a primary voltage occurs and the higher harmonic component is superimposed is proposed.

[Solution]

A converter control device is provided with: a converter device for converting an alternating-current power, which is obtained from a single-phase alternating-current overhead wire via a transformer, into direct-current power; and a control unit for controlling an electric current on an alternating current side of the converter device so that a voltage of a direct current side of the converter device will become a specified value, wherein the control unit sets an output voltage of the converter device based on a voltage value obtained by combining a fundamental wave component and higher harmonic component of a voltage applied to the alternating current side of the converter device via the transformer.

## Description

### [Technical Field]

The present invention relates to a converter control device and is ideal for use in, for example, a converter control device for a railway vehicle for supplying electricity to equipment mounted on the railway vehicle by converting single-phase alternating-current power into direct-current power.

### [Background Art]

Conventionally, a method of driving equipment such as an alternating-current motor by receiving a single-phase alternating-current voltage from a single-phase alternating-current overhead wire via a transformer and converting the received single-phase alternating-current voltage into a voltage of a desired frequency and size by using a converter device and an inverter device has been widely used as a method for driving a railway vehicle that runs in current feeder sections.

The converter device is driven by the above-described drive method by performing on-off control of a plurality of switching elements based on pulse width modulation (PWM) to control an electric current on an alternating current side of the converter device (hereinafter referred to as the secondary current) so that a voltage on the direct current side of the converter device (hereinafter referred to as the direct-current stage voltage) will become a specified value.

Incidentally, for example, a control method such as Patent Literature 1 to 3 is adopted as a converter device control method. Specifically speaking, a desired value of the secondary current is operated so that the direct-current stage voltage will follow the desired value; and an electric current controller operates an alternating-current voltage command so that the secondary current will follow the desired value. Then, an output voltage of the converter device is operated based on the alternating-current voltage command and a detected value of the secondary voltage or a voltage in a sine wave shape corresponding to the secondary voltage and a desired direct-current stage voltage is obtained by performing on-off control of the switching elements based on the output voltage.

Meanwhile, in consideration of countermeasures against higher harmonic waves of an electric current running through the single-phase alternating-current overhead wire (hereinafter referred to as the primary current), it is desirable that the secondary current should be in a sine wave shape. Accordingly, the conventional technology suppresses a harmonic current associated with a phase shift between a secondary voltage and the secondary current by operating a desired value of the secondary current based on a sine wave signal synchronized with a fundamental wave component of the secondary voltage.

A voltage of the single-phase alternating-current overhead wire (hereinafter referred to as the primary voltage) is normally in a sine wave shape and the secondary voltage obtained by having the transformer reduce the primary voltage also takes the sine wave shape. Accordingly, the primary current can be formed into the sine wave shape in the same manner as in the conventional technology by operating a secondary current command based on the sine wave signal synchronized with the fundamental wave component of the secondary voltage.

However, if distortion of the primary voltage occurs due to influences by power generators and other cars connected to wirings, the primary voltage enters a state in which not only the fundamental wave component, but also a higher harmonic component is superimposed. In such a case, the secondary current cannot be maintained in the sine wave shape and the higher harmonic component of the primary current will increase only by synchronizing the desired value of the secondary current with the fundamental wave component of the secondary voltage.

For example, some of alternating-current feeder sections in foreign countries are defined so that tertiary, quinary, and septenary higher harmonic components may be superimposed on the fundamental wave component of the primary voltage; and regarding a converter device for a railway vehicle, it is desirable that the primary current can be suppressed into the sine wave shape even when the higher harmonic components are superimposed on the primary voltage.

### [Citation List]

### [Patent Literature]

[Patent Literature 1] Japanese Patent Application Laid-Open (Kokai) Publication No. 6-197402
[Patent Literature 2] Japanese Patent Application Laid-Open (Kokai) Publication No. 2005-304156
[Patent Literature 3] Japanese Patent Application Laid-Open (Kokai) Publication No. 2010-115018

### [Summary of Invention]

### [Problems to be Solved by the Invention]

Since the higher harmonic component(s) which is superimposed on the primary voltage changes momentarily depending on the status of its source, its size and phase relationship with the fundamental wave component are not determined uniquely. Therefore, in order to form the secondary current into the sine wave shape regardless of the status of the primary voltage, it is necessary to set an output voltage of the converter device including not only the fundamental wave component of the secondary voltage, but also the higher harmonic component.

On the other hand, the control methods of Patent Literature 1 to 3 do not consider the case where the higher harmonic component is superimposed on the primary voltage; and the higher harmonic component of the primary current will increase depending on the status of the primary voltage. Particularly, since a signal corresponding to the secondary voltage is operated by the method of Patent Literature 2 by generating a sine wave signal which is synchronized with the fundamental wave component of the secondary voltage, it is difficult to reproduce the higher harmonic component which is superimposed on the primary voltage. Furthermore, filtering processing is executed on the detected secondary voltage by the method of Patent Literature 3, so that the higher harmonic component included in the primary voltage cannot be obtained accurately.

The present invention was devised in consideration of the above-described circumstances and aims at proposing a converter control device capable of suppressing the higher harmonic component of the primary current even when distortion of the primary voltage occurs and the higher harmonic component is superimposed.

### [Means for Solving the Problems]

In order to solve the above-described problems, the present invention is designed so that with the converter control device, an output voltage of the converter device is set based on a voltage value including the fundamental wave component and the higher harmonic component of the secondary voltage.

### [Advantageous Effects of Invention]

Even when the higher harmonic component is superimposed on the primary voltage, it is possible according to the present invention to form the secondary current in a sine wave shape and suppress the higher harmonic component which is superimposed on the primary current.

### [Brief Description of Drawings]

[Fig. 1] Fig. 1 is a block diagram illustrating an overall configuration of a converter control device according to a first embodiment.
[Fig. 2] Fig. 2 is a block diagram illustrating a configuration example for a filter unit.
[Fig. 3] Fig. 3 is a block diagram illustrating a configuration example for the filter unit.
[Fig. 4] Fig. 4 is a block diagram illustrating a configuration example for the filter unit.
[Fig. 5] Fig. 5 is a block diagram illustrating an overall configuration of a converter control device according to a second embodiment.
[Fig. 6] Fig. 6 is a block diagram illustrating a configuration example for a higher harmonic component extractor.
[Fig. 7] Fig. 7 is a block diagram illustrating a configuration example for the higher harmonic component extractor.

### [Mode for Carrying out the Invention]

An embodiment of the present invention will be described in detail with reference to drawings.

### (1) First Embodiment

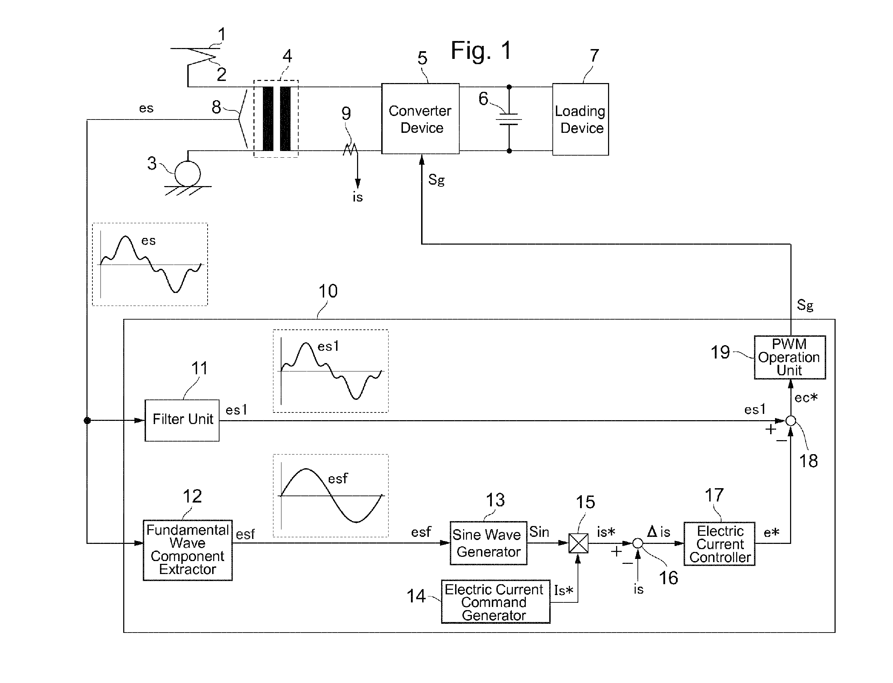

Fig. 1 illustrates a converter control device for a railway vehicle according to a first embodiment. This converter control device includes a transformer 4, one end on its primary side of which is connected to an alternating-current overhead wire 1 via a pantograph 2 and the other end on its primary side of which is connected via wheels 3 to rails. The transformer 4 transforms alternating-current power, which is supplied from the alternating-current overhead wire 1 via the pantograph 2, into specified power and supplies it to the converter device 5.

The converter device 5 is configured by including a plurality of switching elements and converts the alternating-current power, which is supplied from the transformer 4, into direct-current power by turning these switching elements on and off in accordance with a gate signal Sg supplied from a control unit 10. The direct current side of the converter device 5 is connected to a loading device 7 via a capacitor 6 for stabilizing the voltage.

The loading device 7 is a device driven by direct-current power output from the converter device 5 and examples of the loading device 7 include a device, which is a combination of an inverter device for converting direct-current power into three-phase alternating-current power and an alternating-current motor, and a device which is a combination of, for example, an auxiliary power unit called APS (Auxiliary Power Supply) and lights. An explanation about the configuration and operation of the loading device 7 is omitted.

On the other hand, a voltage detector 8 detects a voltage value of an alternating-current voltage applied from the alternating-current overhead wire 1 to the transformer 4 via the pantograph 2, converts the detected voltage value to a secondary voltage es of the transformer 4 based on a winding rate of the transformer 4, and transmits the converted voltage value to the control unit 10. Furthermore, a current detector 9 detects a secondary current is of the transformer 4 and transmits the detected secondary current is to the control unit 10.

The control unit 10 calculates a secondary current command is* for making the direct-current stage voltage (the voltage on the direct current side of the converter device 5) a specified value (constant value) based on the secondary voltage es supplied from the voltage detector 8 and the secondary current is supplied from the current detector 9 and controls driving of the converter device 5 so that the secondary current is detected by the current detector 9 will follow the secondary current command is*.

The feature of this converter control device which will be described later in detail is to calculate the secondary current command is* based on a sine wave signal Sin which is synchronized with a fundamental wave component esf of the secondary voltage es supplied from the voltage detector 8 and set an output voltage of the converter device 5 (a voltage on the alternating current side of the converter device 5) based on an alternating-current voltage command e* calculated to make the secondary current is follow the secondary current command is*, and a voltage value (filter secondary voltage es1 described later) obtained by combining the fundamental wave component esf and the higher harmonic component of the secondary voltage es.

As a result, the output voltage of the converter device 5 can be set to form the secondary current is into the sine wave shape according to an actual secondary voltage. So, even if distortion of the primary voltage occurs, the secondary current is and the primary current can be formed into the sine wave shape.

Next, the details of the control unit 10 will be explained. The secondary voltage es which is output from the voltage detector 8 is supplied to the filter unit 11 for the control unit 10. Then, the filter unit 11 extracts the fundamental wave component and the higher harmonic component of the secondary voltage es from the secondary voltage es supplied from the voltage detector 8 and transmits them as the filter secondary voltage es1 to a second subtractor 18.

Furthermore, the secondary voltage es which is output from the voltage detector 8 is also supplied to a fundamental wave component extractor 12 for the control unit 10. Then, the fundamental wave component extractor 12 extracts the fundamental wave component esf from the secondary voltage es and transmits the extracted fundamental wave component esf to a sine wave generator 13.

The sine wave generator 13 generates a sine wave signal Sin, which is synchronized with the fundamental wave component esf supplied from the fundamental wave component extractor 12, and transmits the generated sine wave signal Sin to a multiplier 15. When this happens, a secondary current amplitude command Is* which is operated to make the direct-current stage voltage a specified value is also supplied from the electric current command generator 14 to the multiplier 15.

Accordingly, the multiplier 15 generates the secondary current command is* composed of an electric current value, which the secondary current is of the transformer 4 should follow, by multiplying the sine wave signal Sin supplied from the sine wave generator 13 by the secondary current amplitude command Is* supplied from the electric current command generator 14 and transmits the generated secondary current command is* to a first subtractor 16.

The first subtractor 16: calculates the difference between the secondary current command is* and the secondary current is* by subtracting the secondary current is* from the secondary current command is* based on the secondary current command is*, which is supplied from the multiplier 15, and the secondary current is which is supplied from the current detector 9; and transmits the calculated difference as a secondary current deviation Δis to the electric current controller 17.

The electric current controller 17 generates an alternating-current voltage command e* composed of a corrected value of the filter secondary voltage es1 to make the secondary current is follow the secondary current command is* based on the secondary current deviation Δis supplied from the first subtractor 16 and transmits the generated alternating-current voltage command value e* to a second subtractor 18.

Accordingly, the second subtractor 18 generates a converter voltage command ec* by subtracting the alternating-current voltage command e* from the filter secondary voltage es1 and transmits it to a PWM operation unit 19.

The PWM operation unit 19 generates a gate signal Sg for on-off control of the switching elements constituting the converter device 5 to make the direct-current stage voltage a specified value based on the converter voltage command ec* supplied from the second subtractor 18 and outputs the generated gate signal Sg to the converter device 5.

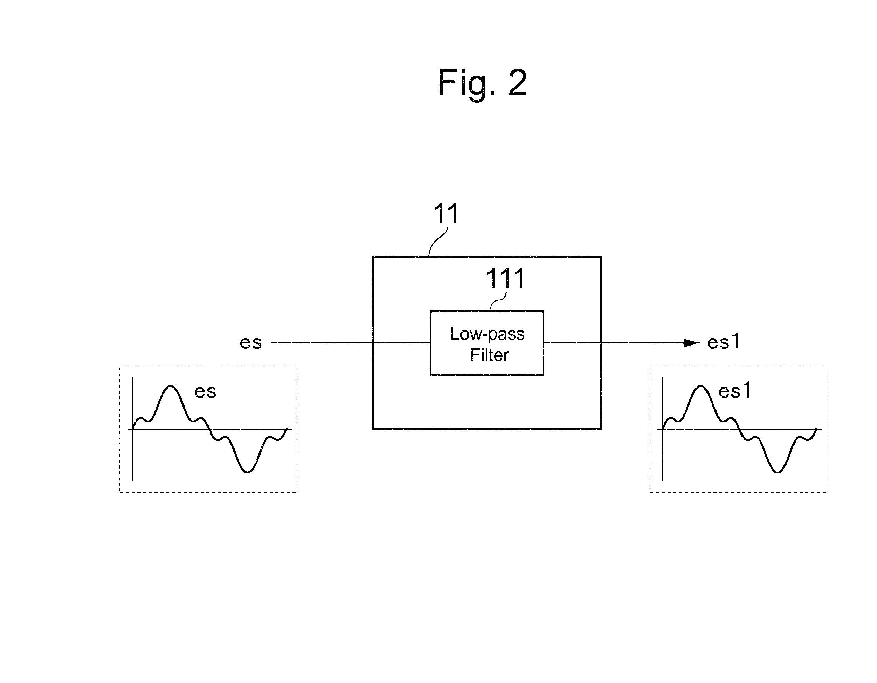

Now, Fig. 2 to Fig. 4 illustrate specific configuration examples of the filter unit 11. Of these drawings, Fig. 2 illustrates a configuration example in which the filter unit 11 is composed of a low-pass filter 111. In this case, a higher harmonic component associated with on-off operation of the switching elements constituting the converter device 5 is also superimposed on the secondary voltage es via the transformer 4. Since this higher harmonic component is not included in the primary voltage, it is desirable that the higher harmonic component should be removed in terms of control of the converter device 5. Therefore, the low-pass filter 111 capable of extracting a voltage value, which is a combination of the fundamental wave component esf and the higher harmonic component of the secondary voltage es, and removing a higher harmonic component with frequency equal to or higher than that associated with on-off operation of the switching elements constituting the converter device 5 (that is, extracting a voltage value of a lower frequency component than the frequency at which the switching elements operate) should preferably be used.

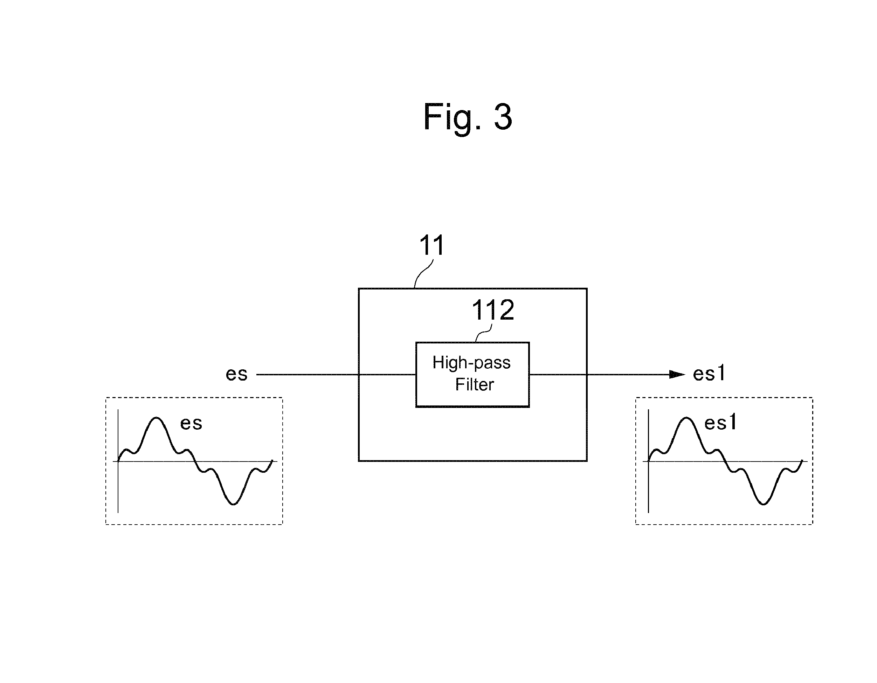

Fig. 3 illustrates a configuration example in which the filter unit 11 is composed of a high-pass filter 112. In this case, there is a possibility that a direct current component associated with a detection error may be superimposed on the secondary voltage es. If the direct current component is superimposed on the secondary voltage es, the direct current component will be superimposed on a converter voltage command ec*, which is operated based on the direct current component, and the output voltage of the converter device 5. If the direct current component is superimposed on the output voltage of the converter device 5, bias magnetism is caused to the transformer 4 and it is thereby desirable to remove the direct current component. Therefore, the high-pass filter 112 capable of removing the direct current component included in the secondary voltage es and extracting the fundamental wave component esf of the secondary voltage es and a higher harmonic component of higher frequency than the fundamental wave component esf should preferably used.

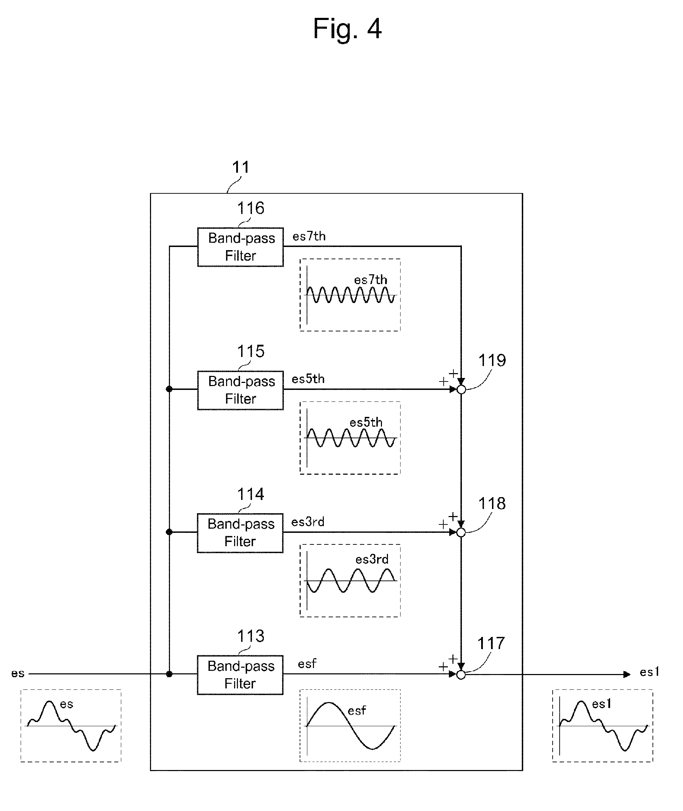

Fig. 4 illustrates a configuration example in which the filter unit 11 is composed of a band-pass filter for extracting the fundamental wave component esf of the secondary voltage es and band-pass filters for extracting higher harmonic components. Referring to Fig. 4, a band-pass filter 113 is a filter for extracting the fundamental wave component esf of the secondary voltage es and each of band-pass filters 114 to 116 is a filter for extracting tertiary higher harmonic waves, quinary higher harmonic waves, or septenary higher harmonic waves of the secondary voltage.

Incidentally, Fig. 4 shows that the higher harmonic components to be extracted are tertiary, quinary, and septenary higher harmonic components; however, this order does not limit the present invention and a band-pass filter(s) for extracting a higher harmonic component(s) of higher order may be included. For example, if it is defined that the tertiary, quinary, and septenary higher harmonic components may be superimposed on the primary voltage, the filter unit 11 can be configured by inputting the secondary voltage es to the band-pass filter 113 for extracting the fundamental wave component esf and the band-pass filters 114 to 116 for extracting the higher harmonic components and having the adders 117 to 119 add outputs from the band-pass filters.

As the above-described configuration is used, the defined higher harmonic components can be detected with certainty; and furthermore, it is possible to eliminate influences of the higher harmonic components in association with noise, which occurs when detecting the secondary voltage es, and on-off operation of the converter device 5 and the direct current component in association with detection errors of the secondary voltage.

If the converter control device according to this embodiment described above is used, the output voltage of the converter device 5 can be set based on the voltage value (the filter secondary voltage es1) which is a combination of the fundamental wave component esf and the higher harmonic component esh of the secondary voltage es. So, even when distortion of the primary voltage occurs, the higher harmonic component of the primary current can be suppressed. Furthermore, distortion associated with a phase shift between the secondary voltage and the secondary current can be suppressed in the same manner as in the conventional technology by operating the secondary current command is* based on the sine wave signal Sin synthesized with the fundamental wave component esf of the secondary voltage es.

Incidentally, an alternating-current feeding method for railroads is widely applied both domestically and abroad and a plurality of frequencies are adopted, for example, 50 [Hz] and 60 [Hz] domestically and 16.8 [Hz] and 25 [Hz] abroad. Normally, the primary voltage for which each of the above-mentioned frequencies is its fundamental wave is applied to the transformer on a vehicle; however, in some case, a higher harmonic component may be superimposed on the primary voltage and distortion may occur depending on the status of feeding sections. Even under such a condition, it is desirable in terms of countermeasures against the higher harmonic waves to maintain the primary current in the sine wave shape. Even when the higher harmonic waves are superimposed on the primary voltage, the converter control device according to this embodiment can suppress the higher harmonic component of the primary current; and since the converter control device according to this embodiment does not depend on an alternating-current feeding frequency, it is useful for vehicles in general running in the alternating current feeder sections both domestically and abroad.

### (2) Second Embodiment

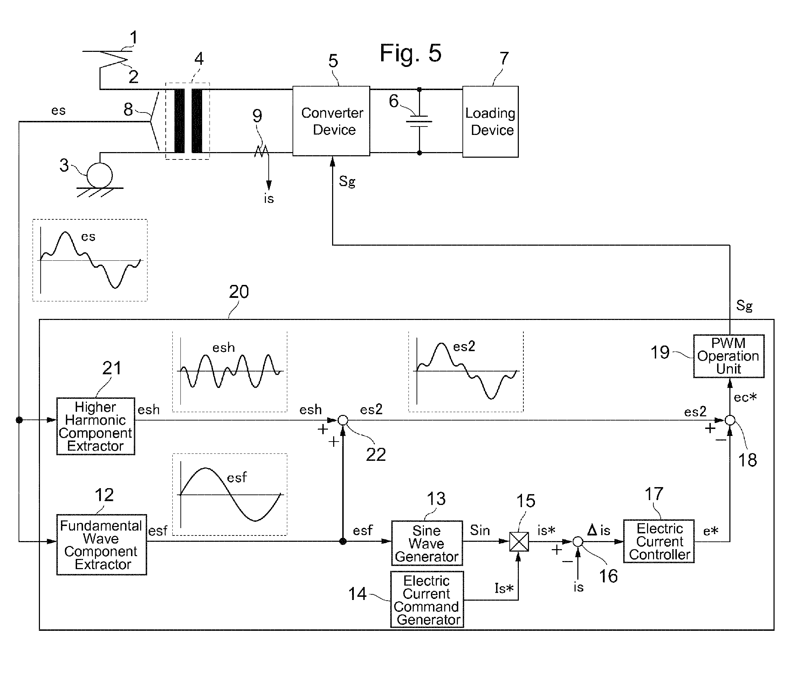

Fig. 5 which indicates elements corresponding to those in Fig. 1 by assigning the same reference numerals as used in Fig. 1 to them illustrates a converter control device for a railway vehicle according to a second embodiment. The differences between this converter control device and the converter control device according to the first embodiment are that: a higher harmonic component extractor 21 for extracting the higher harmonic component esh of the secondary voltage es is provided, instead of the filter unit 11 (Fig. 1), in a control unit 20; and the control unit 20 operates a converter voltage command ec* by using a secondary voltage es2 obtained by adding the fundamental wave component esf of the secondary voltage es and the higher harmonic component esh of the secondary voltage es (hereinafter referred to as the higher-harmonic-component-imposed secondary voltage).

In this case, the aforementioned secondary voltage es is supplied from the voltage detector 8 to the higher harmonic component extractor 21 for the control unit 20. The higher harmonic component extractor 21 extracts the higher harmonic component esh from this secondary voltage es and outputs the extracted higher harmonic component esh to an adder 22. When this happens, the fundamental wave component esf which is output from the fundamental wave component extractor 12 is also supplied to the adder 22.

Accordingly, the adder 22 generates the higher-harmonic-component-imposed secondary voltage es2, which is a combination of the fundamental wave component esf and the higher harmonic component esh of the secondary voltage es, by adding the higher harmonic component esh supplied from the higher harmonic component extractor 21 and the fundamental wave component esf supplied from the fundamental wave component extractor 12. Then, the adder 22 outputs the higher-harmonic-component-imposed secondary voltage es2, which is generated in the above-described manner, to the second subtractor 18.

The second subtractor 18 generates the converter voltage command ec* by subtracting the alternating-current voltage command value e* which is supplied from the electric current controller, from the higher-harmonic-component-imposed secondary voltage es2 which is supplied from the adder 22 and outputs the generated converter voltage command ec* to the PWM operation unit 19.

Accordingly, the PWM operation unit 19 generates the gate signal Sg for on-off control of the switching elements constituting the converter device 5 to make the direct-current stage voltage a specified value based on the converter voltage command ec* supplied from the second subtractor 18 and outputs the generated gate signal Sg to the converter device 5.

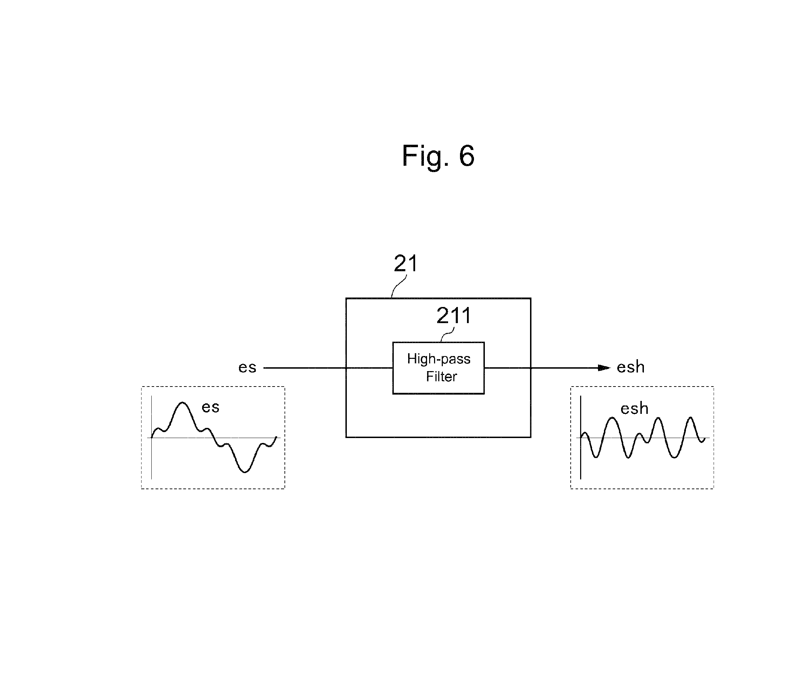

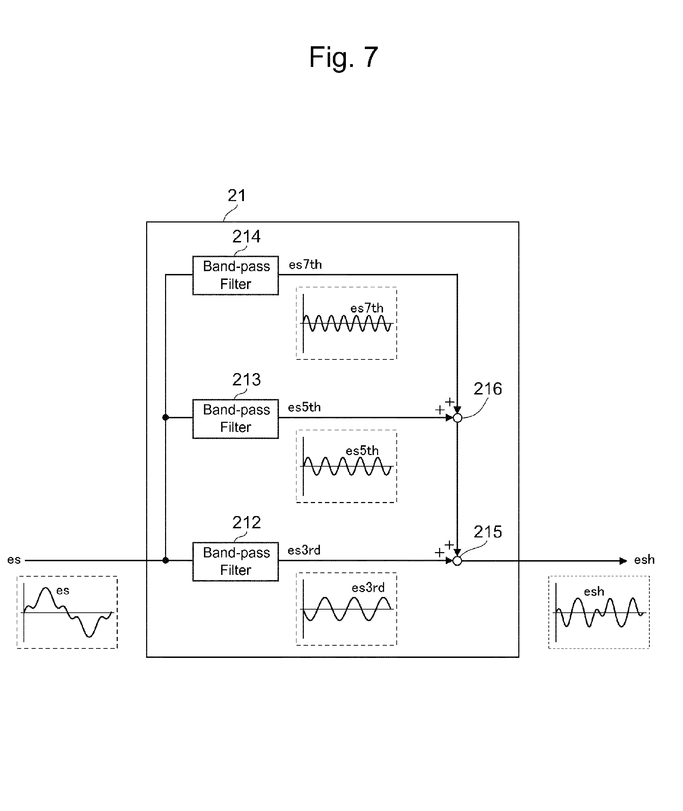

Now, Fig. 6 and Fig. 7 illustrate configuration examples for the higher harmonic component extractor 21. Of these drawings, Fig. 6 illustrates a configuration example in which the higher harmonic component extractor 21 is composed of a high-pass filter 211. In this case, there is a possibility that a direct current component associated with a detection error may be superimposed on the secondary voltage es. If the direct current component is superimposed on the secondary voltage es, the direct current component will be superimposed on a converter voltage command ec*, which is operated based on the direct current component, and the output voltage of the converter device 5. If the direct current component is superimposed on the output voltage of the converter device 5, bias magnetism is caused to the transformer 4 and it is thereby desirable to remove the direct current component. Therefore, the high-pass filter 211 capable of removing the direct current component included in the secondary voltage es and extracting a voltage value including the higher harmonic component of the secondary voltage es should preferably be used.

Fig. 7 is a configuration example in which the higher harmonic component extractor 21 is composed of band-pass filters for extracting higher harmonic components of the secondary voltage es. Referring to Fig. 7, band-pass filters 212 to 214 are filters for extracting tertiary higher harmonic waves, quinary higher harmonic waves, and septenary higher harmonic waves of the secondary voltage, respectively.

Incidentally, Fig. 7 shows that the higher harmonic components to be extracted are tertiary, quinary, and septenary higher harmonic components; however, this order does not limit the present invention and a band-pass filter(s) for extracting a higher harmonic component(s) of higher order may be included. For example, if it is defined that the tertiary, quinary, and septenary higher harmonic components may be superimposed on the primary voltage, the higher harmonic component extractor 21 can be configured by inputting the secondary voltage es to the band-pass filters 212 to 214 for extracting those higher harmonic components and adding outputs from the respective band-pass filters by using adders 215, 216.

As the above-described configuration is used, the defined higher harmonic components can be detected with certainty; and furthermore, it is possible to eliminate influences of the higher harmonic components in association with noise at the time of detection and on-off operation of the converter device and the direct current component in association with detection errors of the secondary voltage.

If the converter control device according to this embodiment described above is used, the output voltage of the converter device 5 can be set based on the higher-harmonic-component-superimposed secondary voltage es2 obtained by combining the fundamental wave component esf and the higher harmonic component esh of the secondary voltage es; and even when distortion of the primary voltage occurs, the higher harmonic component of the primary current can be suppressed. Furthermore, distortion associated with a phase shift between the secondary voltage and the secondary current can be suppressed in the same manner as in the conventional technology by operating the secondary current command is* based on the sine wave signal Sin synthesized with the fundamental wave component esf of the secondary voltage es.

### [Industrial Availability]

The present invention can be applied to a wide variety of converter control devices for railway vehicles having various configurations.

### [Reference Signs List]

1 Single-phase alternating-current overhead wire; 2 pantograph; 3 wheels; 4 transformer; 5 converter device; 6 capacitor; 7 loading device; 8 voltage detector; 9 current detector; 10, 20 control units; 11 filter unit; 12 fundamental wave component extractor; 13 sine wave generator; 14 electric current command generator; 15 multiplier; 16 first subtractor; 17 electric current controller; 18 second subtractor; 19 PWM operation unit; 21 higher harmonic component extractor; 22, 117 to 119, 215, 216 adders; 111 low-pass filter; 112 and 211 high-pass filters; 113 to 116, 212 to 214 band-pass filters; e* alternating-current voltage command; es secondary voltage; esf fundamental wave component; esh higher harmonic component; es3rd tertiary higher harmonic component; es5th quinary higher harmonic component; es7th septenary higher harmonic component; es1 filter secondary voltage; es2 higher-harmonic-component-imposed secondary voltage; Is* secondary current amplitude command; is* secondary current command; is secondary current; Δis secondary current deviation; ec* converter voltage command; Sg gate signal; and Sin sine wave signal.

## Claims

1. A converter control device comprising:
a converter device for converting an alternating-current power, which is obtained from a single-phase alternating-current overhead wire via a transformer, into direct-current power; and
a control unit for controlling an electric current on an alternating current side of the converter device so that a voltage of a direct current side of the converter device will become a specified value,
wherein the control unit sets an output voltage of the converter device based on a voltage value obtained by combining a fundamental wave component and higher harmonic component of a voltage applied to the alternating current side of the converter device via the transformer.

2. The converter control device according to claim 1, wherein the control unit includes:
a fundamental wave component extractor for extracting a fundamental wave component of the voltage applied to the alternating current side of the converter device; and
a filter unit for extracting the voltage value including the fundamental wave component and the higher harmonic component of the voltage applied to the alternating current side of the converter device; and
wherein the control unit:
calculates a desired value of the electric current on the alternating current side of the converter device based on the fundamental wave component extracted by the fundamental wave component extractor so that the voltage of the direct current side of the converter device will become the specified value; and
sets the output voltage of the converter device based on a voltage value calculated so that the electric current on the alternating current side of the converter device will follow the desired value, and the voltage value extracted by the filter unit.

3. The converter control device according to claim 2, wherein the filter unit is a low-pass filter for extracting a voltage value of a lower frequency component than frequency for operating a switching element constituting the converter device.

4. The converter control device according to claim 2, wherein the filter unit is a high-pass filter for extracting the fundamental wave component of the voltage applied to the alternating current side of the converter device and a higher frequency component than the fundamental wave component.

5. The converter control device according to claim 2, wherein the filter unit includes:
a first band-pass filter for extracting the fundamental wave component of the voltage applied to the alternating current side of the converter device; and
at least one second band-pass filter for extracting a higher frequency component than the fundamental wave component; and
wherein the filter unit outputs the voltage value obtained by adding each output from the first and second band-pass filters.

6. The converter control device according to claim 1, wherein the control unit includes:
the fundamental wave component extractor for extracting the fundamental wave component of the voltage applied to the alternating current side of the converter device; and
a higher harmonic component extractor for extracting the higher harmonic component from the voltage applied to the alternating current side of the converter device; and
wherein the control unit:
calculates a desired value of the electric current on the alternating current side of the converter device based on a voltage value of the fundamental wave component extracted by the fundamental wave component extractor so that the voltage of the direct current side of the converter device will become the specified value; and
sets the output voltage of the converter device based on a voltage value calculated to make the electric current on the alternating current side of the converter device follow the desired value, and a voltage value obtained by adding the voltage value of the fundamental wave component extracted by the fundamental wave component extractor and a voltage value of the higher harmonic component extracted by the higher harmonic component extractor.

7. The converter control device according to claim 6, wherein the higher harmonic component extractor is a high-pass filter for extracting a higher frequency component than the fundamental wave component of the voltage applied to the alternating current side of the converter device.

8. The converter control device according to claim 6, wherein the higher harmonic component extractor includes at least one band-pass filter for extracting a higher frequency component than the fundamental wave component of the voltage applied to the alternating current side of the converter device; and
wherein the higher harmonic component extractor outputs the voltage value obtained by adding a voltage output from each band-pass filter.
